(19) Europäisches Patentamt
European Patent Office
Office européen des brevets

(11) **EP 2 207 639 B1**

(12) **FASCICULE DE BREVET EUROPEEN**

(45) Date de publication et mention
de la délivrance du brevet:
**15.08.2012 Bulletin 2012/33**

(21) Numéro de dépôt: **07825656.7**

(22) Date de dépôt: **13.11.2007**

(51) Int Cl.:
**B23C 5/10** *(2006.01)*    **B23B 51/02** *(2006.01)*
**B23D 77/14** *(2006.01)*    **B23B 51/04** *(2006.01)*
**A61C 3/02** *(2006.01)*

(86) Numéro de dépôt international:
**PCT/IB2007/003469**

(87) Numéro de publication internationale:
**WO 2009/063261 (22.05.2009 Gazette 2009/21)**

(54) **INSTRUMENT DE COUPE, ET PROCEDES DE MISE EN OEUVRE DE CELUI-CI**

SCHNEIDINSTRUMENT UND VERFAHREN ZUR IMPLEMENTIERUNG DESSELBEN

CUTTING INSTRUMENT AND METHODS FOR IMPLEMENTING SAME

(84) Etats contractants désignés:
**AT BE BG CH CY CZ DE DK EE ES FI FR GB GR
HU IE IS IT LI LT LU LV MC MT NL PL PT RO SE
SI SK TR**

(43) Date de publication de la demande:
**21.07.2010 Bulletin 2010/29**

(73) Titulaire: **Maillefer Instruments Holding S.À.R.L.
1338 Ballaigues (CH)**

(72) Inventeur: **DELACRETAZ, Francis
CH-1337 Vallorbe (CH)**

(74) Mandataire: **Micheli & Cie SA
Rue de Genève 122
Case Postale 61
1226 Genève-Thônex (CH)**

(56) Documents cités:
**DE-A1- 4 405 749     US-A- 4 560 309**

# EP 2 207 639 B1

**Description**

La présente invention se rapporte au domaine des instruments de coupe comme connu de US 4 560 309. Elle vise plus particulièrement un instrument de coupe rotatif tel qu'une fraise. Elle vise encore des procédés mettant en oeuvre un tel instrument de coupe.

US 4560309 montre un instrument de coupe de type rotatif, notamment de type fraise ou alésoir, ledit instrument de coupe étant doté d'un fût, ayant un axe longitudinal et qui comporte au moins une goujure alternant avec au moins une partie active, chaque goujure et chaque partie active étant usinées dans le fût, chaque partie active présente une surface périphérique qui comporte, successivement :

- une arête radiale de coupe,

- une face sensiblement plane constituant une face de détalonnage pour favoriser l'évacuation des copeaux,

- une face de contrôle pour contrôler la profondeur de pénétration de la coupe, ladite face de contrôle débouchant dans une goujure,
  et

- ladite arête radiale de coupe définit une enveloppe de coupe, et se trouve à une distance de coupe dudit axe longitudinal,

- ladite face de détalonnage est définie par une longueur angulaire de détalonnage, et se trouve à une distance dudit axe longitudinal qui varie entre la distance de coupe et une distance terminale de détalonnage.

- ladite face de contrôle est définie par une longueur angulaire de contrôle de pénétration, et se trouve à une distance de contrôle de pénétration dudit axe longitudinal,

- l'écart, en valeur absolue, entre ladite distance de coupe et ladite distance de contrôle de pénétration est inférieur à l'écart, en valeur absolue, entre ladite distance de coupe et ladite distance terminale de détalonnage.

Dans l'exposé qui suit, le terme « fraise » est employé au sens le plus général. Il recouvre les alésoirs, ainsi que les fraises annulaires qui agissent autour d'une pièce à usiner. Dans l'exposé qui suit, on appelle « fraise creuse » une telle fraise annulaire, et « fraise pleine » une fraise non annulaire. Dans l'exposé qui suit, le terme « longitudinal » se rapporte à une entité sensiblement parallèle à un axe longitudinal, et le terme « transversal » se rapporte à une entité sensiblement perpendiculaire à cet axe longitudinal.

Un instrument de coupe selon l'invention trouve des applications dans de nombreux domaines. Une fraise pleine peut être utilisée dans le domaine médical, en particulier dans le domaine dentaire lors de traitements endodontiques pour l'alésage de canaux radiculaires, le façonnage de moignons, la préparation et le taillage de couronnes, la préparation de cavités. Une fraise creuse peut être utilisée dans le domaine de la bijouterie, par exemple pour l'usinage de griffes de sertissage. Bien que privilégiées, ces applications ne sont pas limitatives de l'instrument de coupe selon l'invention.

Le domaine dentaire et le domaine de la bijouterie ont en commun le fait que les éléments à usiner ou à façonner - dents ou griffes de sertissage - ont des dimensions faibles et nécessitent une grande précision des opérations d'usinage. Ils ont également en commun le fait que les techniques mises en oeuvre pour la réalisation des instruments de coupe sont similaires.

Le façonnage des cavités, des faux moignons préprothétiques et des prothèses est réalisé au moyen de fraises ayant des géométries très variées. Ces fraises peuvent être rondes, cylindriques à bout rond ou à bout plat, coniques, ogivales, etc. Ces fraises peuvent avoir des diamètres variés s'étageant de 0,6 mm à plusieurs millimètres. Ces fraises possèdent plusieurs dents, en général 6 dents. Elles ont une capacité de coupe qui dépend de leur géométrie.

Une durée d'utilisation importante de l'instrument de coupe peut conduire à un échauffement de celui-ci et du matériau usiné, c'est-à-dire de la dentine ou de la matière prothétique. Il est alors nécessaire de prévoir des pauses de refroidissement, qui se traduisent par une perte de temps pour le praticien et un confort moindre pour le patient traité. Une durée d'utilisation importante peut également conduire à une usure importante de l'instrument de coupe.

Dans le domaine de la bijouterie, les conditions d'utilisations sont plus particulièrement liées à la dimension des pièces usinées et à la qualité souhaitée des surfaces obtenues après usinage.

On connaît déjà des instruments de coupe de type « fraise pleine » utilisés dans le domaine dentaire, et des instruments de coupe de type « fraise creuse » utilisés dans le domaine de la bijouterie.

Ces instruments de coupe présentent une alternance de parties actives et de goujures. Chaque partie active comporte au moins une arête radiale de coupe qui attaque la matière à usiner, de manière plus ou moins agressive, ce qui génère des copeaux de matière retirée. Les copeaux sont évacués par une goujure adjacente à l'arête radiale de coupe.

Il arrive parfois que les copeaux ne soient pas totalement évacués par les goujures, et qu'ils viennent s'interposer entre la partie active de l'instrument de coupe et la matière à usiner. Ces copeaux restent plus ou moins mobiles ou au contraire s'agrègent dans une zone particulière. Dans le domaine de l'endodontie, dans lequel sont mises en oeuvre des fraises pleines, des copeaux viennent se placer entre la partie active de l'instrument de coupe et la paroi du canal radiculaire en train d'être nettoyé, et peuvent se loger dans des recoins du canal radiculaire. Dans le domaine de la bijouterie, dans lequel sont mises en oeuvre des fraises creuses, des copeaux viennent se placer entre la partie active de l'instrument de coupe et la surface extérieure de la griffe de sertissage, et peuvent rester mobiles entre ces deux pièces. Dans tous les cas, les copeaux non évacués perturbent le bon déroulement de l'opération d'usinage en cours. Ils peuvent bloquer l'instrument de coupe ou conduire celui-ci à patiner.

De plus, il n'est pas toujours aisé de connaître à tout moment l'impact réel de l'instrument de coupe sur la matière à usiner et de doser la puissance de l'instrument de coupe, que ce soit sur les parois dentaires avec une fraise pleine, ou sur la surface extérieure d'une griffe de sertissage avec une fraise creuse.

Un but de la présente invention est de proposer un instrument de coupe de type rotatif, qui puissent être utilisé, notamment, dans le domaine dentaire ou dans un autre domaine médical, ainsi que dans le domaine de la bijouterie, sans y être limité, et qui surmonte les inconvénients évoqués ci-dessus.

Selon un premier aspect, l'invention se rapporte à un instrument de coupe de type rotatif, notamment de type fraise ou alésoir, ledit instrument de coupe étant doté d'un fût ayant un axe longitudinal et qui comporte au moins une goujure alternant avec au moins une partie active, chaque goujure et chaque partie active étant usinées dans ledit fût. Selon l'invention, chaque partie active présente une surface périphérique qui comporte, successivement :

- une arête radiale de coupe,
- une face sensiblement plane constituant une face de détalonnage pour favoriser l'évacuation des copeaux,
- une face de transition faisant un angle avec la face de détalonnage, et
- une face de contrôle pour contrôler la profondeur de pénétration de la coupe, ladite face de contrôle débouchant dans une goujure,
  et
- ladite arête radiale de coupe définit une enveloppe de coupe, et se trouve à une distance de coupe Rc dudit axe longitudinal,
- ladite face de détalonnage est définie par une longueur angulaire de détalonnage, et se trouve à une distance dudit axe longitudinal qui varie entre la distance de coupe Rc et une distance terminale de détalonnage Rd,
- ladite face de transition se trouve à une distance de transition Rt dudit axe longitudinal,
- ladite face de contrôle est définie par une longueur angulaire de contrôle de pénétration, et se trouve à une distance de contrôle de pénétration Rp dudit axe longitudinal,
- l'écart $\Delta p$, en valeur absolue, entre ladite distance de coupe Rc et ladite distance de contrôle de pénétration Rp est supérieur à zéro et inférieur à l'écart $\Delta t$, en valeur absolue, entre ladite distance de coupe Rc et ladite distance de transition Rt, satisfaisant à la relation :

$$0 < \Delta p < \Delta t, \text{ avec } \Delta p = |Rc - Rp| \text{ et } \Delta t = |Rc - Rt|,$$

et

- l'écart $\Delta p$, en valeur absolue, entre ladite distance de coupe Rc et ladite distance de contrôle de pénétration Rp est supérieur à zéro et inférieur à l'écart $\Delta d$, en valeur absolue, entre ladite distance de coupe Rc et ladite distance terminale de détalonnage Rd, satisfaisant à la relation :

$$0 < \Delta p < \Delta d, \text{ avec } \Delta p = |Rc - Rp| \text{ et } \Delta d = |Rc - Rd|.$$

Un avantage d'un tel instrument de coupe réside dans le fait que pour chaque partie active, l'arête radiale de coupe constitue la seule zone de la surface périphérique de la partie active qui atteigne l'enveloppe de coupe.

Selon une première variante de réalisation, correspondant à un instrument de coupe de type « fraise pleine », la face de détalonnage s'étend à partir de l'arête radiale de coupe en se rapprochant de l'axe longitudinal du fût jusqu'à une distance terminale de détalonnage. De manière similaire, selon une deuxième variante de réalisation, correspondant à un instrument de type « fraise creuse », la face de détalonnage s'étend à partir de l'arête radiale de coupe en s'éloignant de l'axe longitudinal du fût jusqu'à une distance terminale de détalonnage.

Pour les deux variantes de réalisation, la face de contrôle s'étend à une distance comprise entre la distance de coupe et la distance terminale de détalonnage. Par suite, les copeaux, qui n'ont pas été évacués dans la goujure précédant l'arête radiale de coupe dans le sens de rotation de l'instrument de coupe, peuvent être acheminés le long de la face de détalonnage puis le long de la face de contrôle, jusqu'à la goujure suivante où ils peuvent se loger avant d'être évacués. Le risque de stagnation de copeaux en regard des parties actives est fortement diminué, si ce n'est supprimé. De plus, la face de contrôle permet de mesurer ou d'imposer avec précision une distance minimale de pénétration de l'arête radiale de coupe dans la pièce à usiner. Enfin, le fait que la distance de contrôle de pénétration soit comprise entre la distance de coupe et la distance terminale de détalonnage permet de réduire de manière significative les vibrations lors de la coupe.

Selon la première variante de réalisation, le fût est un fût cylindrique ou conique ou de forme arrondie et ayant un rayon qui lest confondu avec la distance de coupe.

Selon une caractéristique de cette première variante de réalisation, l'extrémité libre dudit fût comporte des arêtes frontales en saillie, dans lesquelles chaque arête frontale s'étend sensiblement jusqu'au plan longitudinal médian qui lui est perpendiculaire, et dans lesquelles au moins l'une desdites arêtes frontales s'étend au-delà dudit plan longitudinal médian qui lui est perpendiculaire. Un avantage de cette caractéristique réside dans le fait que l'extrémité libre de l'instrument de coupe se trouve dotée d'une fonction supplémentaire. Avec les instruments de coupe de type « fraise pleine » connus Jusqu'à présent, la partie centrale de l'extrémité libre sert uniquement à percer la matière à usiner. Selon l'invention, lorsque au moins une arête frontale s'étend au-delà du plan longitudinal médian qui lui est perpendiculaire, la partie centrale de l'extrémité libre devient une zone non seulement perçante, mais encore coupante. Selon une caractéristique additionnelle de cette première variante de réalisation, chacune de ces arêtes frontales se trouve dans le prolongement longitudinal d'une paroi d'une goujure sur laquelle s'appuie une arête radiale de coupe.

Selon la deuxième variante de réalisation, le fût est un fût cylindrique ou conique ou de forme arrondie, annulaire, et ayant un rayon intérieur qui est confondu avec la distance de coupe.

Des formes d'exécution particulières de l'instrument de coupe selon le premier aspect de l'invention sont définies dans les revendications annexées 2 à 4, 6 à 12, 15, 16, 18 à 22.

Selon un deuxième aspect, l'invention se rapporte à des procédés mettant en oeuvre un instrument de coupe selon le premier aspect de l'invention, et notamment un procédé d'usinage d'une griffe de sertissage dans le domaine de la bijouterie, qui met en oeuvre un instrument de coupe selon la deuxième variante du premier aspect de l'invention.

L'invention sera mieux comprise à la lecture de la description détaillée qui va suivre, de modes de réalisation particuliers de l'instrument de coupe, fournis à titre illustratif et nullement limitatif, en référence aux dessins annexés, dans lesquels :

- la figure 1 représente, en perspective, un instrument de coupe de type « fraise pleine » ayant deux goujures et deux parties actives ;
- la figure 2 représente une section transversale de l'instrument de coupe de la figure 1 ;
- les figures 3 et 4 sont analogues à la figure 2 et illustrent la plage d'amplitude de l'âme de l'instrument de coupe ainsi que la plage d'amplitude du volume des goujures ;
- les figures 5 et 6 sont analogues à la figure 2 et illustrent la plage d'amplitude de l'angle d'attaque de l'arête radiale de coupe de l'instrument de coupe ;
- les figures 7 et 8 sont analogues à la figure 2 et illustrent la plage d'amplitude de la distance de contrôle de pénétration de l'instrument de coupe ;
- la figure 9 est analogue à la figure 2 et illustre une variante géométrique de la face de contrôle ;
- la figure 10, représente, en vue frontale, l'extrémité libre de l'instrument de coupe ;
- les figures 11, 12 et 13 sont analogues à la figure 2 pour des instruments de coupe ayant, respectivement, une goujure et une partie active, trois goujures et trois parties actives, quatre goujures et quatre parties actives ;
- la figure 14 représente, en coupe transversale, un instrument de coupe de type « fraise creuse » ayant deux goujures et deux parties actives ;
- la figure 15 illustre une forme de réalisation alternative de l'instrument de coupe de la figure 14 ;
- les figures 16 et 17 sont analogues à la figure 15 et illustrent la plage d'amplitude de l'angle d'attaque de l'instrument de coupe ;
- les figures 18 et 19 sont analogues à la figure 15 et illustrent la plage d'amplitude de la longueur angulaire de détalonnage de l'instrument de coupe ;
- les figures 20 et 21 sont analogues à la figure 15 et illustrent la plage d'amplitude de la longueur angulaire de contrôle, ainsi que la plage d'amplitude du volume des goujures de l'instrument de coupe ;
- les figures 22 et 23 sont analogues à la figure 15 et illustrent la plage d'amplitude de la distance de contrôle de l'instrument de coupe.

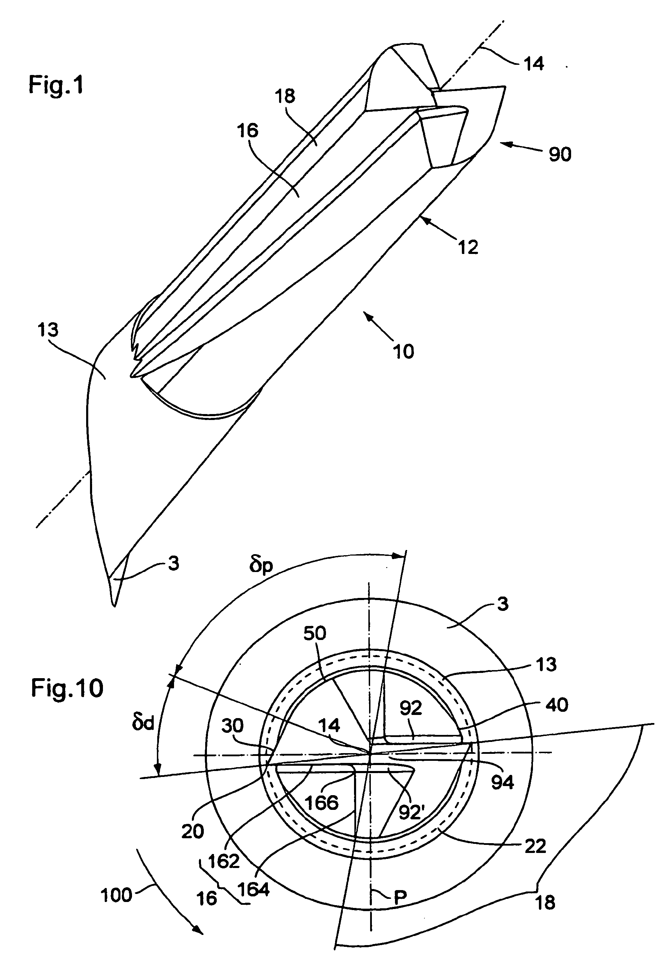

Il va tout d'abord être décrit un instrument de coupe 10 de type « fraise pleine », en référence aux figures 1 à 13. La figure 1 représente, en perspective, un instrument de coupe 10, comportant un fût 12 assemblé sur un col 13 solidaire d'une tige d'entraînement 3. Le fût 12 est un fût cylindrique ou conique ou de forme arrondie, de révolution autour d'un axe longitudinal 14. Par forme arrondie, on entend une forme dont l'enveloppe, en coupe longitudinale, présente un profil non rectiligne. Une telle forme arrondie peut être, par exemple, une forme sphérique, une forme en poire, une forme en tonneau ou encore une forme en flamme. Le fût 12 est doté de deux goujures 16 droites et de deux parties actives 18 droites alternant avec ces goujures 16. Le fût 12 se termine par une extrémité libre 90 qui sera détaillée ultérieurement.

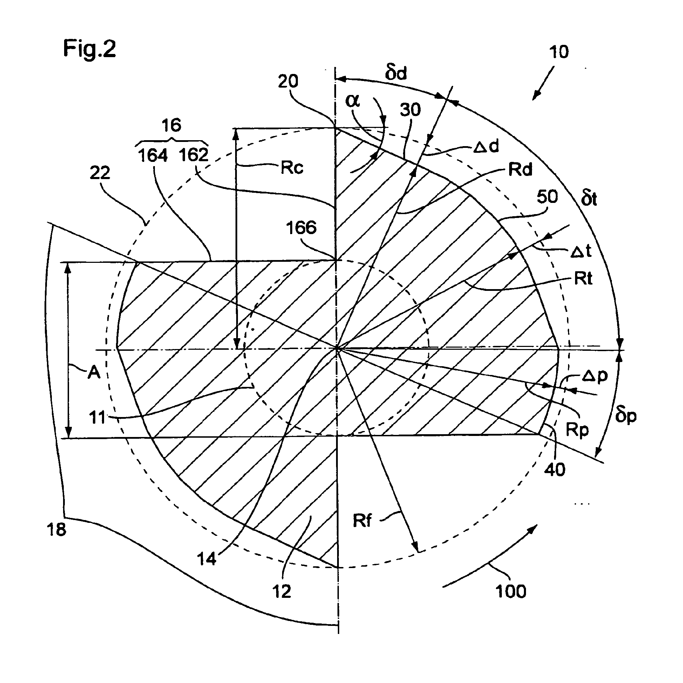

Sur la figure 2 est représentée une section transversale de l'instrument de coupe 10 de la figure 1. Cette section transversale présente une symétrie centrale.

Chaque goujure 16 est délimitée par deux parois 162, 164, qui sont toutes deux planes et perpendiculaires entre elles, de sorte que le fond 166 de la goujure 16 définit un angle droit.

On défmit l'âme 11 du fût 12 comme étant la partie centrale du fût se trouvant à l'intérieur d'un cylindre ou d'un cône ou d'une forme arrondie centré(e) sur l'axe longitudinal 14 et délimité par les fonds 166 des goujures 16. Cette âme 11 du fût 12 présente un diamètre indiqué par le repère A à la figure 2. Le diamètre A est un pourcentage du diamètre du fût 12, compris entre 0% et 95% de celui-ci, de préférence entre 5% et 30%, et de manière encore plus préférée entre 10% et 20%.

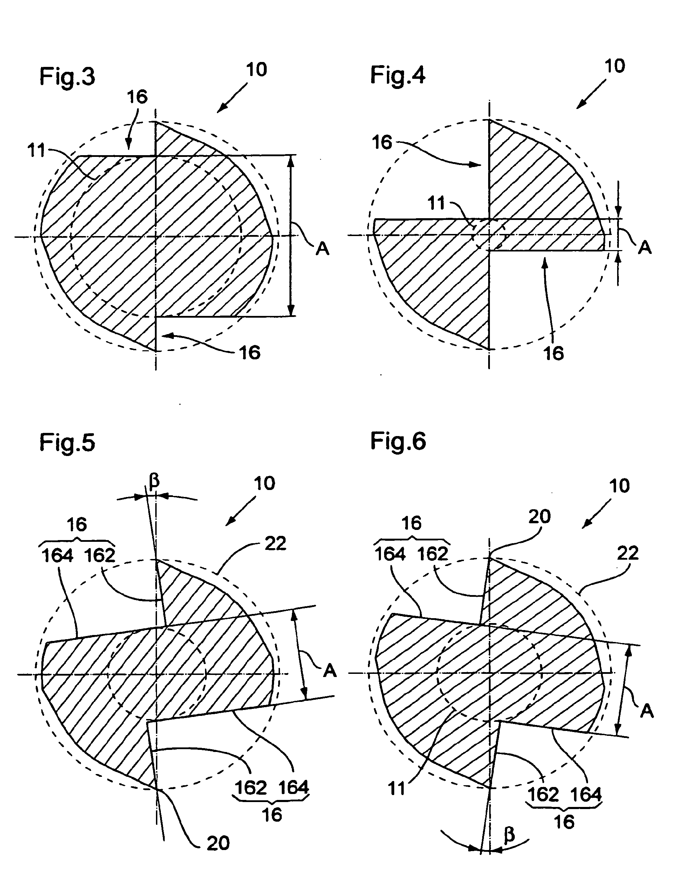

Les figures 3 et 4 représentent toutes deux une section transversale d'un instrument de coupe 10 analogue à celui de la figure 2, et illustrent la plage d'amplitude de l'âme 11 du fût 12, ainsi que la plage d'amplitude du volume des goujures 16. La figure 3 montre la valeur maximal que peut atteindre l'âme 11 de l'instrument de coupe 10 et la valeur minimale du volume des goujures 16, tandis que la figure 4 montre la valeur minimale que peut atteindre l'âme 11 de l'instrument de coupe 10 et la valeur maximale du volume des goujures 16.

En revenant à la figure 2, il apparaît que la surface périphérique de chaque partie active 18 comporte, successivement, une arête radiale de coupe 20, une face de détalonnage 30 et une face de contrôle 40, ainsi qu'une face de transition 50 s'étendant entre la face de détalonnage 30 et la face de contrôle 40.

L'arête radiale de coupe 20 se trouve à une distance Rc, dite distance de coupe, de l'axe longitudinal 14. Elle définit une enveloppe de coupe cylindrique 22 ou conique ou de forme arrondie ayant un rayon égal à la distance de coupe Rc et représentée par un cercle en traits discontinus à la figure 2. La distance de coupe Rc est confondue avec le rayon Rf du fût 12.

L'arête radiale de coupe 20 s'appuie sur l'une des parois de la goujure 16, plus précisément sur la paroi 162 qui la précède dans le sens de rotation de l'instrument de coupe 10 indiqué par la flèche 100 aux figures.

Lorsque cette paroi 162 est portée par un rayon Rf du fût 12, comme représenté à la figure 2, l'arête radiale de coupe 20 possède un angle d'attaque β qui est sensiblement nul. Lorsque cette paroi 162 s'écarte d'un rayon du fût 12 à partir de l'arête radiale de coupe 20 et en direction de la partie active 18, comme représenté à la figure 5, l'arête radiale de coupe 20 possède un angle d'attaque β négatif. Lorsque cette paroi 162 s'écarte d'un rayon du fût 12 à partir de l'arête radiale de coupe 20 et en direction de la goujure 16, comme représenté à la figure 6, l'arête radiale de coupe 20 possède un angle d'attaque β positif.

Cet angle d'attaque β est compris entre -45 degrés et 45 degrés, de manière préférée entre -20 degrés et 20 degrés, et de manière encore plus préférée entre -10 degrés et 10 degrés.

Selon l'invention, il est préféré que l'angle d'attaque β soit négatif, ou à défaut égal à zéro, de telle sorte que l'instrument de coupe 10 présente une agressivité de coupe conséquente.

En revenant à la figure 2, la face de détalonnage 30 s'étend à partir de l'arête radiale de coupe 20 en suivant le sens inverse du sens de rotation 100 de l'instrument de coupe 10. Cette face de détalonnage 30 est une face sensiblement plane définie par un angle de dépouille α et par une longueur angulaire de détalonnage δd. Elle se trouve à une distance de l'axe longitudinal 14 qui varie entre la distance de coupe Rc à son extrémité s'appuyant sur l'arête radiale de coupe 20 et une distance terminale de détalonnage Rd à son extrémité opposée.

L'angle de dépouille α est l'angle formé entre cette face de détalonnage 30 et le plan tangent à l'enveloppe de coupe 22, ayant pour sommet l'arête radiale de coupe 20. Cet angle de dépouille a est compris entre 0 degré et 45 degrés, de manière préférée entre 5 degrés et 30 degrés, et de manière encore plus préférée entre 10 degrés et 20 degrés.

La longueur angulaire de détalonnage δd est l'angle du secteur, centré sur l'axe longitudinal 14, qui délimite la face de détalonnage 30. Cette longueur angulaire de détalonnage δd est comprise entre 5 degrés et 160 degrés, de manière préférée entre 6 degrés et 50 degrés, et de manière encore plus préférée entre 7 degrés et 10 degrés.

La longueur angulaire δd de cette face de détalonnage 30 dépend de la meule utilisée pour usiner l'instrument de coupe 10 et du diamètre et de la forme dudit instrument de coupe 10. La distance terminale de détalonnage Rd est fonction de l'angle de dépouille α et de la longueur angulaire de détalonnage δd.

Du fait que l'instrument de coupe 10 est de type « fraise pleine » et présente une section transversale inscrite dans un disque, la distance terminale de détalonnage Rd est inférieure à la distance de coupe Rc. Par suite, l'écart Δd, en valeur absolue, entre la distance de coupe Rc et la distance terminale de détalonnage Rd, représente la distance radiale entre l'enveloppe de coupe 22 et la surface périphérique de la partie active 18 à l'extrémité de la face de détalonnage 30. Cet écart $\Delta d$, en valeur absolue, est compris entre 0,03 mm et 0,3 mm.

A partir de la face de détalonnage 30, et toujours en suivant le sens inverse du sens de rotation 100 de l'instrument de coupe 10, s'étend une face de transition 50, qui sera décrite plus en détail par la suite.

A partir de la face de transition 50 et toujours en suivant le sens inverse du sens de rotation 100 de l'instrument de coupe 10, s'étend la face de contrôle 40, qui est définie par une longueur angulaire de contrôle de pénétration $\delta p$ et qui se trouve à une distance Rp, dite distance de contrôle de pénétration, de l'axe longitudinal 14.

La longueur angulaire de contrôle de pénétration $\delta p$ est l'angle du secteur, centré sur l'axe longitudinal 14, qui délimite la face de contrôle 40. Cette longueur angulaire de contrôle de pénétration $\delta p$ est comprise entre 0 degré et 100 degrés, de manière préférée entre 5 degrés et 60 degrés, et de manière encore plus préférée entre 10 degrés et 30 degrés.

La longueur angulaire $\delta p$ de cette face de contrôle 40 dépend de la capacité de coupe, de la taille de la meule utilisée pour usiner l'instrument de coupe 10, et de la dimension dudit instrument de coupe 10.

Sur la figure 2 est illustrée une première forme de réalisation de ladite face de contrôle 40, pour laquelle la distance de contrôle de pénétration Rp est constante, de sorte que ladite face de contrôle 40 présente, dans un plan transversal audit axe longitudinal 14, un profil sensiblement en arc de cercle.

L'écart $\Delta p$, en valeur absolue, entre la distance de coupe Rc et la distance de contrôle de pénétration Rp représente la distance radiale entre l'enveloppe de coupe 22 et la surface périphérique de la partie active 18 le long de la face de contrôle 40. Cet écart $\Delta p$, en valeur absolue, est compris entre 0,03 mm et 0,3 mm.

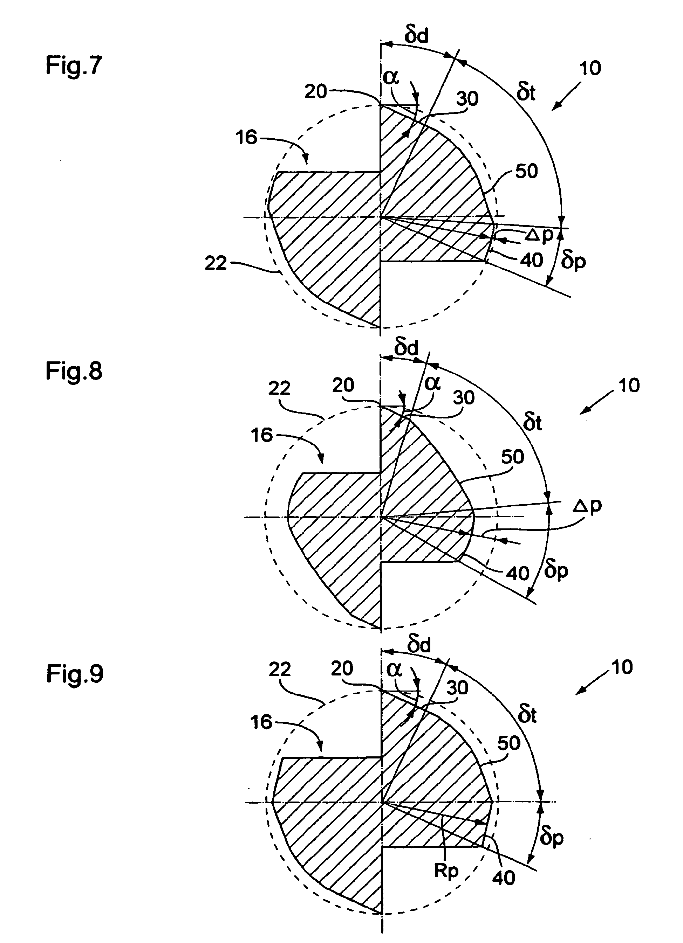

Les figures 7 et 8 représentent toutes deux une section transversale d'un instrument de coupe 10 analogue à celui de la figure 2, et illustrent la plage d'amplitude de cet écart $\Delta p$. La figure 7 montre la valeur minimale de cet écart $\Delta p$, tandis que la figure 8 montre la valeur maximale de cet écart $\Delta p$.

La figure 9 illustre une deuxième forme de réalisation de ladite face de contrôle 40, qui est une face sensiblement plane pour laquelle la distance de contrôle de pénétration Rp n'est pas constante, de sorte que ladite face de contrôle 40 présente, dans un plan transversal audit axe longitudinal 14, un profil sensiblement rectiligne. De préférence, ce profil rectiligne correspond sensiblement à la corde du profil en arc de cercle de la variante illustrée à la figure 2.

Selon une caractéristique de la première variante de réalisation de l'instrument de coupe 10, la distance de coupe Rc, la distance terminale de détalonnage Rd et la distance de contrôle de pénétration Rp satisfont à la relation : Rd < Rp < Rc.

En particulier, la différence entre la distance de coupe Rc et la distance de contrôle de pénétration Rp est supérieure à zéro et est inférieure à la différence entre la distance de coupe Rc et la distance terminale de détalonnage Rd, ce qui se traduit par la relation : 0 < Rc - Rp < Rc - Rd.

En d'autres termes, l'écart, en valeur absolue, entre la distance de coupe Rc et la distance de contrôle de pénétration Rp est différent de zéro et est inférieur à l'écart, en valeur absolue, entre la distance de coupe Rc et la distance terminale de détalonnage Rd, ce qui se traduit par la relation :

$$0 < \Delta p < \Delta d, \text{ avec } \Delta p = |Rc - Rp| \text{ et } \Delta d = |Rc - Rd|.$$

En revenant maintenant à la figure 2, la face de transition 50 va être décrite. Cette face de transition 50 est définie par une longueur angulaire de transition $\delta t$ et se trouve à une distance Rt, dite distance de transition, de l'axe longitudinal 14.

La longueur angulaire de transition $\delta t$ est l'angle du secteur, centré sur l'axe longitudinal 14, qui délimite la face de transition 50. Elle est comprise entre 0 degré et 150 degrés, de manière préférée entre 30 degrés et 120 degrés, et de manière encore plus préférée entre 60 degrés et 90 degrés.

Le rôle de la face de transition 50 est de relier la face de détalonnage 30 et la face de contrôle 40. De préférence, la face de transition 50 présente un contour globalement convexe. Sur l'exemple illustré à la figure 2, la face de transition 50 présente, en coupe transversale, un contour constitué d'une partie centrale en arc de cercle, sensiblement concentrique à l'enveloppe de coupe 22, et de deux parties finales, situées de part et d'autre de la partie centrale. Ces deux parties finales sont plus ou moins longues et relient progressivement la partie centrale aux faces de détalonnage 30 et de contrôle 40 qui sont situées de part et d'autre de cette face de transition 50.

Du fait que la face de transition 50 a pour seul rôle de relier la face de détalonnage 30 et la face de contrôle 40, la valeur de la distance transition Rt n'a pas de signification particulière. Il est seulement important que la distance de contrôle de pénétration Rp reste supérieure à cette distance de transition Rt, satisfaisant à la relation : Rt < Rp < Rc. En d'autres termes, l'écart $\Delta p$, en valeur absolue, entre la distance de coupe Rc et la distance de contrôle de pénétration Rp reste inférieur à l'écart At, en valeur absolue, entre la distance de coupe Rc et la distance de transition Rt, satisfaisant à la relation :

$$0 < \Delta p < \Delta t, \text{ avec } \Delta p = |Rc - Rp| \text{ et } \Delta t = |Rc - Rt|.$$

Un avantage de cet agencement ($\Delta p < \Delta t$) réside dans le fait que les copeaux qui n'auraient pas été évacués dans la goujure 16 précédant l'arête radiale de coupe 20 peuvent aisément être acheminés entre la face de détalonnage 30 et la face de contrôle 40, sans être retenus ou freinés d'une quelconque manière au niveau de la face de transition 50.

Sur la figure 10 est illustrée, en vue frontale, l'extrémité libre 90 de l'instrument de coupe 10 de la figure 1. Les deux arêtes radiales de coupe 20 définissent l'enveloppe de coupe 22. La face de détalonnage 30 est suivie d'une face de transition 50 elle-même suivie d'une face de contrôle 40. Chaque goujure 16 est délimitée par deux parois 162, 164 sensiblement perpendiculaires entre elles et se rejoignant sur le fond 166 de la goujure 16. Chaque arête radiale de coupe 20 s'appuie sur la paroi 162 de la goujure 16 qui la précède dans le sens de rotation 100 de l'instrument de coupe 10. Chacune de ces parois 162 se prolonge vers l'avant, suivant la direction de l'axe longitudinal 14, par une arête frontale 92, 92'. Un plan longitudinal médian perpendiculaire aux deux arêtes 92, 92' est indiqué par le repère P. En considérant la partie supérieure de la figure 10, l'arête frontale 92 s'étend sensiblement jusqu'au plan longitudinal médian P. En considérant la partie inférieure de la figure 10, l'autre arête frontale 92' s'étend au-delà de ce plan longitudinal médian P. Par conséquent, il existe une zone 94 sensiblement centrale de l'extrémité libre 90 de l'instrument de coupe 10 qui est une zone de recouvrement entre les deux arêtes frontales 92, 92'. Sur l'exemple illustré, cette zone de recouvrement 94 se situe d'un seul côté (à droite sur la figure 10) du plan longitudinal médian P. En variante, la zone de recouvrement 94 pourrait se situer de part et d'autre de ce plan longitudinal médian P, l'extrémité libre 90 ayant ses deux arêtes 92, 92' qui s'étendent au-delà du plan longitudinal médian P, mais la configuration de la figure 10 est préférée.

Il apparaît que plus le nombre d'arêtes frontales qui s'étendent au-delà du plan longitudinal médian qui leur est perpendiculaire est important, et plus la coupe est efficace. Mais si le nombre de telles arêtes frontales est trop important, une fragilité de la partie centrale de l'extrémité libre s'installe, ce qui peut conduire à la rupture d'une ou plusieurs arête(s). C'est pourquoi il est préféré de limiter le nombre d'arêtes concernées. Par exemple, lorsque l'extrémité libre de l'instrument de coupe comporte exactement deux arêtes frontales, il est préféré qu'une seule de ces deux arêtes s'étende au-delà du plan longitudinal médian qui lui est perpendiculaire. C'est cet exemple qui est illustré à la figure 10.

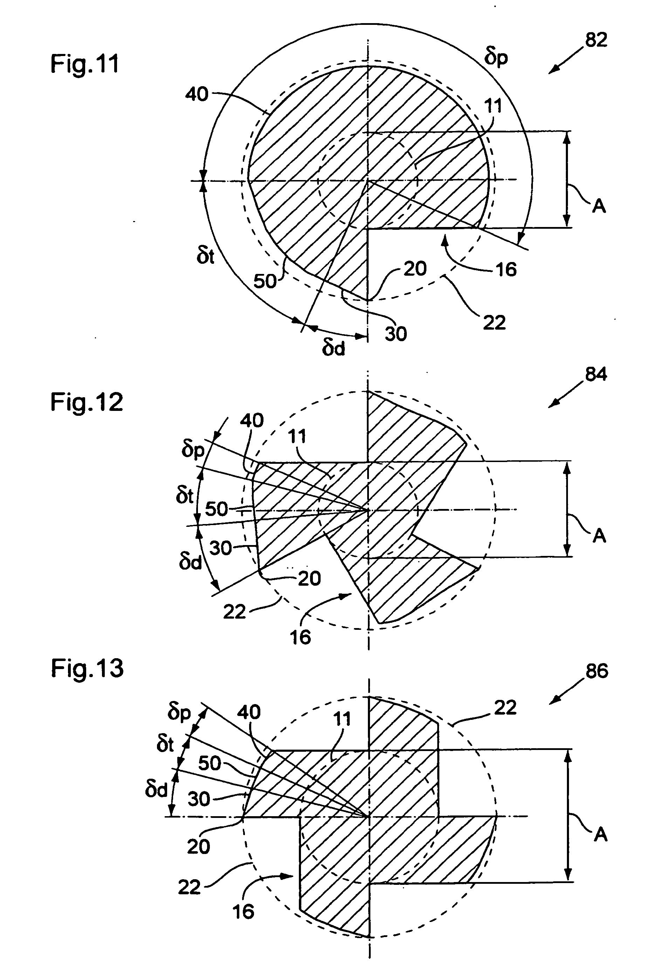

Les figures 11, 12 et 13 illustrent des modes de réalisation alternatifs de l'instrument de coupe 82, 84, 86, qui diffèrent de l'instrument de coupe 10 illustré à la figure 2 par le nombre de goujures 16 et de parties actives 18 dont ils sont dotés. L'instrument de coupe 82 illustré à la figure 11 est doté d'une goujure 16 et d'une partie active 18. Dans ce cas, la longueur angulaire de contrôle de pénétration $\delta p$ est comprise entre 0 degré et 300 degrés. L'instrument de coupe 84 illustré à la figure 12 est doté de trois goujures 16 et de trois parties actives 18. L'instrument de coupe 86 illustré à la figure 13 est doté de quatre goujures 16 et de quatre parties actives 18. Leurs autres caractéristiques sont analogues à celles qui ont été décrites en référence aux figures 1 à 10.

Un instrument de coupe 10 conforme à la première variante de réalisation qui vient d'être décrite en référence aux figures 1 à 13 peut être mis en oeuvre dans un procédé de préparation d'un canal radiculaire lors d'un traitement dentaire. Un tel instrument de coupe 10 est de préférence réalisé en carbure de tungstène ou en acier inoxydable de type martensitique ou en acier au carbone.

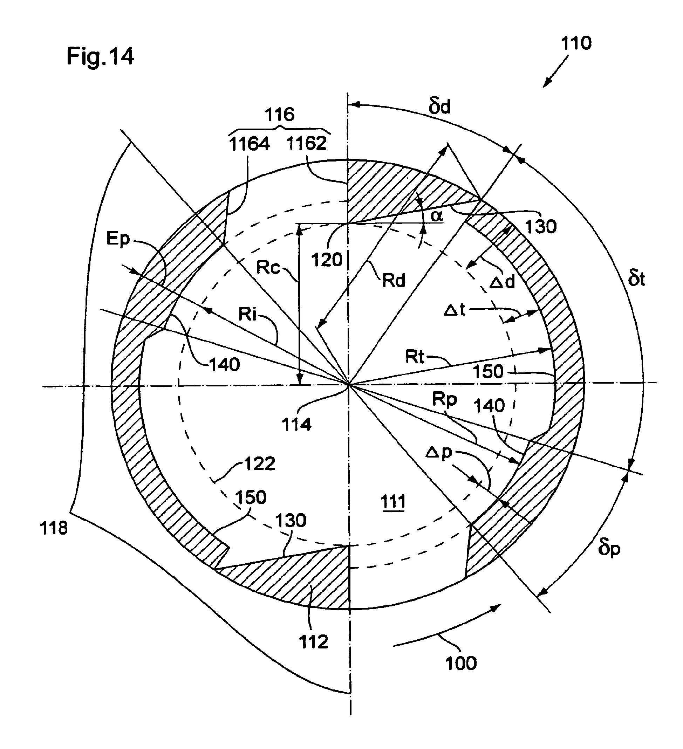

Il va maintenant être décrit un instrument de coupe 110 de type « fraise creuse », en référence aux figures 14 à 23.

La figure 14 représente une section transversale d'un instrument de coupe 110 comportant une calotte hémisphérique 111 se prolongeant par un fût 112 cylindrique ou conique ou de forme arrondie, et annulaire, de révolution autour d'un axe longitudinal 114. Cette section transversale présente une symétrie centrale. Le fût 112 est doté de deux goujures 116 hélicoïdales et de deux parties actives 118 hélicoïdales alternant avec ces goujures 116. Il présente un rayon intérieur Ri et une épaisseur Ep.

Toujours sur la figure 14, la surface périphérique de chaque partie active 118 comporte, successivement, une arête radiale de coupe 120, une face de détalonnage 130 et une face de contrôle 140, ainsi qu'une face de transition 150 s'étendant entre la face de détalonnage 130 et la face de contrôle 140.

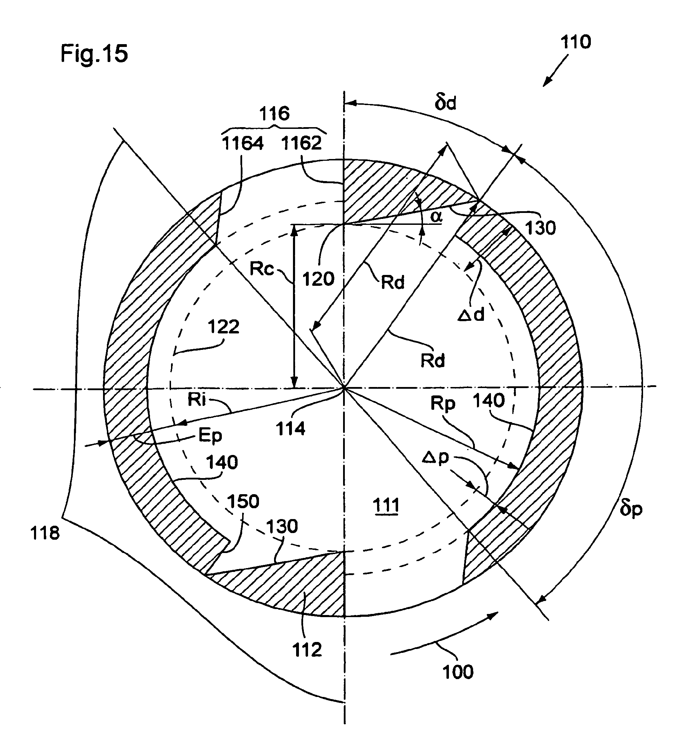

En se référant à la figure 15, il est représenté une section transversale d'une forme de réalisation alternative de l'instrument de coupe de type « fraise creuse », dans laquelle la face de transition 150 est réduite à une face purement radiale.

L'arête radiale de coupe 120 se trouve à une distance Rc, dite distance de coupe, de l'axe longitudinal 114. Elle définit une enveloppe de coupe 122, cylindrique ou conique ou de forme arrondie, et annulaire, représentée par un cercle en traits discontinus aux figures 14 et 15.

L'arête radiale de coupe 120 s'appuie sur l'une des parois de la goujure 116, plus précisément sur la paroi 1162 qui la précède dans le sens de rotation de l'instrument de coupe 110 indiqué par la flèche 100 aux figures.

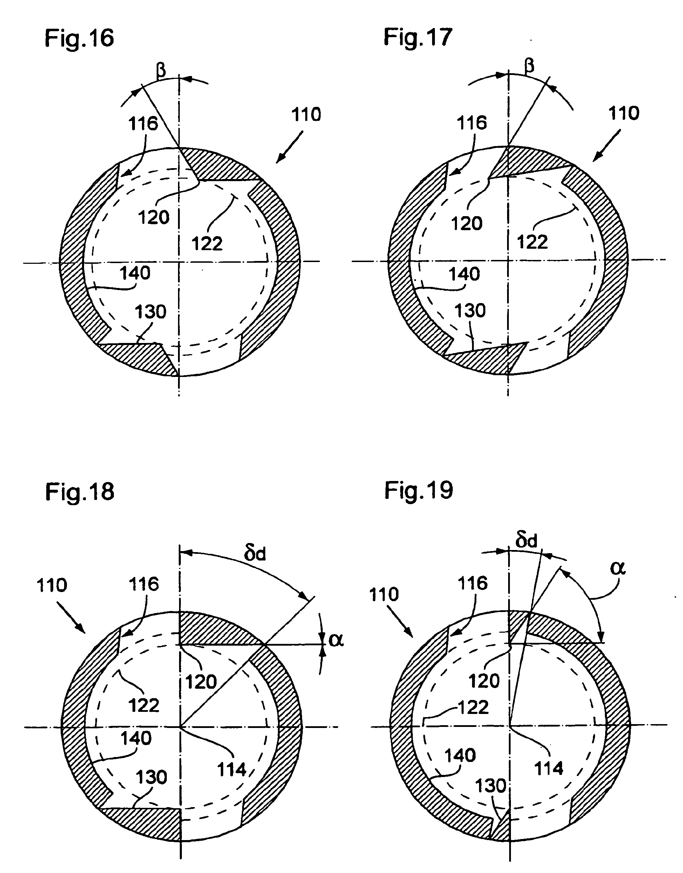

Lorsque cette paroi 1162 est portée par un rayon du fût 112, comme représenté aux figures 14 et 15, l'arête radiale de coupe 120 possède un angle d'attaque $\beta$ qui est sensiblement nul. Lorsque cette paroi 1162 s'écarte d'un rayon du fût 112 à partir de l'arête radiale de coupe 120 et en direction de la partie active 118, comme représenté à la figure 16, l'arête radiale de coupe 120 possède un angle d'attaque β positif. Lorsque cette paroi 1162 s'écarte d'un rayon du fût 112 à partir de l'arête radiale de coupe 120 et en direction de la goujure 116, comme représenté à la figure 17, l'arête radiale de coupe 120 possède un angle d'attaque β négatif.

Cet angle d'attaque β est compris entre -45 degrés et 45 degrés, de manière préférée entre -20 degrés et 20 degrés, et de manière encore plus préférée entre -10 degrés et 10 degrés.

Selon l'invention, il est préféré que l'angle d'attaque β soit négatif, ou à défaut égal à zéro, de telle sorte que l'instrument de coupe 110 présente une agressivité de coupe conséquente.

En revenant aux figures 14 et 15, la face de détalonnage 130 s'étend à partir de l'arête radiale de coupe 120 en suivant le sens inverse du sens de rotation de l'instrument de coupe 110. Cette face de détalonnage 130 est une face sensiblement plane définie par un angle de dépouille α et par une longueur angulaire de détalonnage δd. Elle se trouve à une distance de l'axe longitudinal 114 qui varie entre la distance de coupe Rc à son extrémité s'appuyant sur l'arête radiale de coupe 120 et une distance terminale de détalonnage Rd à son extrémité opposée.

L'angle de dépouille a est l'angle formé entre cette face de détalonnage 130 et le plan tangent à l'enveloppe de coupe 122, ayant pour sommet l'arête radiale de coupe 120. Cet angle de dépouille α est compris entre 0 degré et 30 degrés, de manière préférée entre 5 degrés et 25 degrés, et de manière encore plus préférée entre 10 degrés et 20 degrés.

La longueur angulaire de détalonnage δd est l'angle du secteur, centré sur l'axe longitudinal 114, qui délimite la face de détalonnage 130. Cette longueur angulaire de détalonnage δd est comprise entre 10 degrés et 90 degrés, de manière préférée entre 20 degrés et 60 degrés, et de manière encore plus préférée entre 30 degrés et 45 degrés.

Les figures 18 et 19 représentent toutes deux une section transversale d'un instrument de coupe 110 analogue à celui de la figure 15, et illustrent la plage d'amplitude de la longueur angulaire de détalonnage δd. La figure 18 montre la valeur maximale que peut atteindre la longueur angulaire de détalonnage δd, tandis que la figure 19 montre la longueur minimale que peut atteindre la longueur angulaire de détalonnage δd.

La longueur angulaire δd de cette face de détalonnage 130 dépend de la taille de la fraise utilisée pour usiner l'instrument de coupe 110 et du diamètre dudit instrument de coupe 110. La distance terminale de détalonnage Rd est fonction de l'angle de dépouille a et de la longueur angulaire de détalonnage δd.

Du fait que l'instrument de coupe 110 est de type « fraise creuse » et présente une section transversale inscrite dans un anneau, la distance terminale de détalonnage Rd est supérieure à la distance de coupe Rc. Par suite, l'écart Δd, en valeur absolue, entre la distance de coupe Rc et la distance terminale de détalonnage Rd représente la distance radiale entre l'enveloppe de coupe 122 et la surface périphérique de la partie active 118 le long de cette face de détalonnage 130. Cet écart Δd, en valeur absolue, est un pourcentage du rayon extérieur qui est défini comme étant la somme du rayon intérieur Ri et de l'épaisseur Ep du fût annulaire 112. L'écart Δd, en valeur absolue, est compris entre 2% et 15% du rayon extérieur, et de préférence sensiblement égal à 7% dudit rayon extérieur.

A partir de la face de détalonnage 130, et toujours en suivant le sens inverse du sens de rotation 100 de l'instrument de coupe 110, s'étend une face de transition 150 qui sera décrite plus en détail par la suite, en référence à chacune des deux figures 14 et 15.

A partir de la face de transition 150, et toujours en suivant le sens inverse du sens de rotation 100 de l'instrument de coupe 110, s'étend la face de contrôle 140, qui est définie par une longueur angulaire de contrôle de pénétration δp et qui se trouve à une distance Rp, dite distance de contrôle de pénétration, de l'axe longitudinal 114.

La longueur angulaire de contrôle de pénétration δp est l'angle du secteur, centré sur l'axe longitudinal 114, qui délimite la face de contrôle 140. Cette longueur angulaire de contrôle de pénétration δp est comprise entre 60 degrés et 140 degrés, de manière préférée entre 75 degrés et 130 degrés, et de manière encore plus préférée entre 90 degrés et 120 degrés.

La longueur angulaire de contrôle δp de cette face de contrôle 140 dépend de la capacité de coupe, de la taille de la meule ou de la fraise utilisée pour usiner l'instrument de coupe 110 et de la dimension dudit instrument de coupe 100.

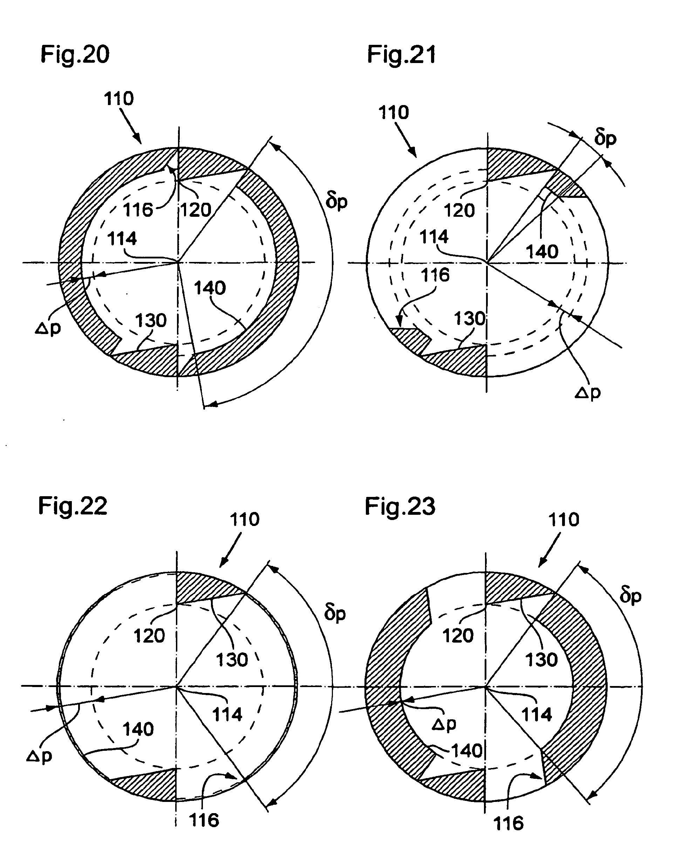

Les figures 20 et 21 représentent toutes deux une section transversale d'un instrument de coupe 110 analogue à celui de la figure 15, et illustrent la plage d'amplitude de la longueur angulaire de contrôle δp. La figure 20 montre la valeur maximale que peut atteindre la longueur angulaire de contrôle de pénétration δp, tandis que la figure 21 montre la valeur minimale que peut atteindre la longueur angulaire de contrôle de pénétration δp.

Sur l'exemple illustré aux figures 14 à 23, la distance de contrôle de pénétration Rp est constante, de sorte que ladite face de contrôle 140 présente, dans un plan transversal à l'axe longitudinal 114, un profil sensiblement en arc de cercle.

L'écart Δp, en valeur absolue, entre la distance de coupe Rc et la distance de contrôle de pénétration Rp représente la distance radiale entre l'enveloppe de coupe 122 et la surface périphérique de la partie active 118 le long de cette face de contrôle 140. Cet écart Ap, en valeur absolue, est compris entre 0,03 mm et 0,3 mm.

Les figures 22 et 23 représentent toutes deux une section transversale d'un instrument de coupe 110 analogue à celui de la figure 15, et illustrent la plage d'amplitude de cet écart Δp. La figure 22 montre la valeur maximale que peut atteindre cet écart Δp, tandis que la figure 23 montre la valeur minimale que peut atteindre cet écart Δp.

Selon une caractéristique de la deuxième variante de réalisation de l'instrument de coupe 110, la distance de coupe Rc, la distance terminale de détalonnage Rd et la distance de contrôle de pénétration Rp satisfont à la relation : Rc < Rp < Rd.

En particulier, la différence entre la distance de contrôle de pénétration Rp et la distance de coupe Rc est supérieure à zéro et est inférieure à la différence entre la distance terminale de détalonnage Rd et la distance de coupe Rc, ce qui se traduit par la relation : 0 < Rp - Rc < Rd - Rc.

En d'autres termes, l'écart, en valeur absolue, entre la distance de coupe Rc et la distance de contrôle de pénétration Rp est différent de zéro et est inférieur à l'écart, en valeur absolue, entre la distance de coupe Rc et la distance terminale de détalonnage Rd, ce qui se traduit par la relation :

$$0 < \Delta p < \Delta d, \text{ avec } \Delta p = |Rc - Rp| \text{ et } \Delta d = |Rc - Rd|.$$

En revenant maintenant aux figures 14 et 15, la face de transition 150 va être brièvement décrite. Cette face de transition 150 est définie par une longueur angulaire de transition δt et se trouve à une distance Rt, dite distance de transition, de l'axe longitudinal 114.

Sur l'exemple illustré à la figure 14, la longueur angulaire de transition δt est l'angle du secteur, centré sur l'axe longitudinal 114, qui délimite la face de transition 150. Elle est comprise entre 0 degré et 150 degrés, de manière préférée entre 30 degrés et 120 degrés, et de manière encore plus préférée entre 60 degrés et 90 degrés.

De préférence, la face de transition 150 présente un contour globalement concave. Sur l'exemple illustré à la figure 14, la face de transition 150 présente, en coupe transversale, un contour constitué d'une partie centrale en arc de cercle, sensiblement concentrique à l'enveloppe de coupe 122, une partie de liaison purement radiale avec la face de détalonnage 130 et une partie de liaison sensiblement rectiligne avec la face de contrôle 140.

Sur l'exemple illustré à la figure 15 ainsi qu'aux figures 16 à 23, la face de transition 150 est purement radiale, de sorte que la longueur angulaire de transition δt est égale à zéro et la distance de transition Rt varie entre Rd et Rp.

Le rôle de la face de transition 150 est de relier la face de détalonnage 130 et la face de contrôle 140. De ce fait, la valeur de la distance de transition Rt n'a pas de signification particulière. Il est seulement important que la distance de contrôle de pénétration Rp reste inférieure à cette distance de transition Rt, satisfaisant à la relation : Rc < Rp < Rt. En d'autres termes, l'écart Δp, en valeur absolue, entre la distance de coupe Rc et la distance de contrôle de pénétration Rp reste inférieur à l'écart At, en valeur absolue, entre la distance de coupe Rc et la distance de transition Rt, satisfaisant à la relation :

$$0 < \Delta p < \Delta t, \text{ avec } \Delta p = |Rc - Rp| \text{ et } \Delta t = |Rc - Rt|.$$

Toujours en référence aux figures 14 et 15, il apparaît que chaque goujure 116 est délimitée par au moins deux parois planes 1162, 1164. En fonction de l'épaisseur radiale de la partie active 118 de l'instrument de coupe 110, chaque goujure 116 peut être soit ouverte sur l'extérieur, comme représenté aux figures, soit fermée par un fond reliant les deux parois 1162 et 1164. Les figures 20 et 21 illustrent également la plage d'amplitude du volume des goujures 116. La figure 20 montre la valeur minimale du volume des goujures 116. Du fait que l'angle d'attaque β est sensiblement égal à zéro pour cet exemple, la paroi 1162 est sensiblement perpendiculaire à l'enveloppe de coupe 122. L'autre paroi 1164 des goujures 116 n'est pas perpendiculaire à l'enveloppe de coupe 122, de telle sorte qu'il existe toujours un volume minimal des goujures 116, pour lequel les deux parois 1162 et 1164 se rejoignent. La figure 21 montre quant à elle la valeur maximale du volume des goujures 116.

Un instrument de coupe 110 conforme à la deuxième variante de réalisation qui vient d'être décrite en référence aux figures 14 à 23 peut être mis en oeuvre dans un procédé d'usinage d'une griffe de sertissage dans le domaine de la bijouterie. Un tel instrument de coupe 110 est de préférence réalisé en acier au carbone ou en acier inoxydable de type martensitique.

De manière commune aux deux variantes de réalisation qui viennent d'être décrites en référence aux figures 1 à 13, respectivement 14 à 23, la partie active 18, 118 de l'instrument de coupe 10, 110 comporte, successivement, une arête radiale de coupe 20, 120 se trouvant à une distance de coupe Rc de l'axe longitudinal 14, 114 de l'instrument de coupe 10, 110, une face de détalonnage 30, 130 se trouvant à une distance de l'axe longitudinal 14, 114 qui varie entre la distance de coupe Rc et une distance terminale de détalonnage Rd, et une face de contrôle 40, 140 se trouvant à une distance de contrôle de pénétration Rp de l'axe longitudinal 14, 114, et ces distances Rc, Rd, Rp satisfont à la relation suivante : 0 < |Rc - Rp| < |Rc - Rd|.

De plus, la partie active 18, 118 de l'instrument de coupe 10, 110 comporte, en outre, une face de transition 50, 150 se trouvant à une distance, variable, Rt de l'axe longitudinal 14, 114. Cette distance Rt est variable et comprise entre Rp et Rd. Elle satisfait à la relation : 0 < | Rc - Rp| < | Rc - Rt|.

Bien entendu, l'invention n'est pas limitée aux variantes et formes de réalisations qui ont été illustrées aux figures et couvre des alternatives à la portée de l'homme du métier.

Les instruments de coupe 10, 110 qui ont été exemplifiés comprennent entre une et quatre goujures et entre une et quatre parties actives. L'invention se rapporte aussi à des instruments de coupe 10, 110 ayant des goujures et des parties actives en nombre supérieur à quatre.

Les instruments de coupe 10, 110 qui ont été exemplifiés comprennent des goujures droites et des parties actives droites. On pourrait envisager des goujures et des parties actives qui ne soient pas droites, mais qui soient, par exemple, hélicoïdales.

La caractéristique illustrée à la figure 10, selon laquelle chaque arête frontale s'étend sensiblement jusqu'au plan longitudinal médian qui lui est perpendiculaire et au moins l'une desdites arêtes frontales s'étend au-delà dudit plan longitudinal médian qui lui est perpendiculaire, est généralisable aux instruments de coupe 84 ayant trois goujures et trois parties actives, aux instruments de coupe 86 ayant quatre goujures et quatre parties actives, et aux instruments de coupe ayant encore davantage de goujures et de parties actives.

Dans la variante de réalisation particulière de l'instrument de coupe 10 de type « fraise pleine » illustrée aux figures 1 à 13, les goujures 16 présentent deux parois 162, 164 qui sont perpendiculaires entre elles. Cette géométrie des goujures 16 n'est pas limitative. En particulier, les goujures 16 pourraient être formées de deux parois 162, 164, délimitant, en coupe transversale, un angle aigu ou un angle obtus. En variante, ces goujures 16 pourraient présenter des parois 162, 164 non rectilignes et/ou un fond 166 arrondi.

## Revendications

1. Instrument de coupe (10, 82, 84, 86, 110) de type rotatif, notamment de type fraise ou alésoir, ledit instrument de coupe (10, 82, 84, 86, 110) étant doté d'un fût (12, 112), ayant un axe longitudinal (14, 114) et qui comporte au moins une goujure (16, 118) alternant avec au moins une partie active (18, 118), chaque goujure (16, 116) et chaque partie active (18, 118) étant usinées dans le fût (12. 112),

   dans lequel

   chaque partie active (18, 118) présente une surface périphérique qui comporte, successivement :

   - une arête radiale de coupe (20, 120),
   - une face sensiblement plane constituant une face de détalonnage (30, 130) pour favoriser l'évacuation des copeaux,
   - une face de transition (50, 150) faisant un angle avec ladite face de détalonnage (30, 130), et
   - une face de contrôle (40, 140) pour contrôler la profondeur de pénétration de la coupe, ladite face de contrôle débouchant dans une goujure (16, 116),
   et dans lequel
   - ladite arête radiale de coupe (20, 120) définit une enveloppe de coupe (22, 122), et se trouve à une distance de coupe (Rc) dudit axe longitudinal (14, 114).
   - ladite face de détalonnage (30, 130) est définie par une longueur angulaire de détalonnage ($\delta d$), et se trouve à une distance dudit axe longitudinal (14, 114) qui varie entre la distance de coupe (Rc) et une distance terminale de détalonnage (Rd),
   - ladite face de transition (50, 150) se trouve à une distance de transition (Rt) dudit axe longitudinal (14),
   - ladite face de contrôle (40, 140) est définie par une longueur angulaire de contrôle de pénétration ($\delta p$), et se trouve à une distance de contrôle de pénétration (Rp) dudit axe longitudinal (14, 114),
   - l'écart ($\Delta p$), en valeur absolue, entre ladite distance de coupe (Rc) et ladite distance de contrôle de pénétration (Rp) est supérieur à zéro et inférieur à l'écart ($\Delta t$), en valeur absolue, entre ladite distance de coupe (Rc) et ladite distance de transition (Rt), satisfaisant à la relation :

   $$0 < \Delta p < \Delta t, \text{ avec } \Delta p = |Rc - Rp| \text{ et } \Delta t = |Rc - Rt|, \text{ et}$$

   - l'écart ($\Delta p$), en valeur absolue, entre ladite distance de coupe (Rc) et ladite distance de contrôle de pénétration (Rp) est inférieur à l'écart ($\Delta d$), en valeur absolue, entre ladite distance de coupe (Rc) et ladite distance terminale de détalonnage (Rd), satisfaisant à la relation :

   $$0 < \Delta p < \Delta d, \text{ avec } \Delta p = |Rc-Rp| \text{ et } \Delta d = |Rc - Rd|.$$

**2.** Instrument de coupe (10, 82, 84, 86, 110) selon la revendication 1, dans lequel ladite arête radiale de coupe (20, 120) est définie par un angle d'attaque (β) qui est sensiblement nul.

**3.** Instrument de coupe (10, 82, 84, 86, 110) selon la revendication 1, dans lequel ladite arête radiale de coupe (20, 120) est définie par un angle d'attaque (β) qui est négatif.

**4.** Instrument de coupe (10, 82, 84, 86, 110) selon la revendication 1, dans lequel ladite arête radiale de coupe (20, 120) est définie par un angle d'attaque (β) qui est positif.

**5.** Instrument de coupe (10, 82, 84, 86) selon l'une quelconque des revendications 1 à 4, dans lequel ledit fût (12) est un fût cylindrique ou conique ou de forme arrondie, et ayant un rayon (Rf) qui est confondu avec la distance de coupe (Rc).

**6.** Instrument de coupe (10, 82, 84, 86) selon la revendication 5, dans lequel ladite distance de contrôle de pénétration (Rp) est constante, de sorte que ladite face de contrôle (40) présente, dans un plan transversal audit axe longitudinal (14), un profil en arc de cercle.

**7.** Instrument de coupe (10, 82, 84, 86) selon la revendication 5, dans lequel ladite distance de contrôle de pénétration (Rp) est linéaire, de sorte que ladite face de contrôle (40) présente, dans un plan transversal audit axe longitudinal (14), un profil rectiligne.

**8.** instrument de coupe (10, 82, 84, 86) selon l'une quelconque des revendications 5 à 7, dans lequel ladite longueur angulaire de détalonnage (8d) est comprise entre 5 degrés et 160 degrés.

**9.** Instrument de coupe (10, 82, 84, 86) selon l'une quelconque des revendications 5 à 8, dans lequel l'écart (∆d), en valeur absolue, entre ladite distance de coupe (Rc) et ladite distance terminale de détalonnage (Rd) est compris entre 0,03 mm et 0,3 mm.

**10.** Instrument de coupe (10, 82, 84, 86) selon l'une quelconque des revendications 5 à 9, comportant au moins deux goujures (16) et au moins deux parties actives (18), et dans lequel ladite longueur angulaire de contrôle de pénétration (δp) est comprise entre 0 degré et 100 degrés.

**11.** Instrument de coupe (10, 82, 84, 86) selon l'une quelconque des revendications 5 à 9, comportant une seule goujure (16) et une seule partie active (18), et dans lequel ladite longueur angulaire de contrôle de pénétration (δp) est comprise entre 0 degré et 300 degrés.

**12.** Instrument de coupe (10, 82, 84, 86) selon l'une quelconque des revendications 5 à 11, dans lequel l'écart (∆p), en valeur absolue, entre ladite distance de coupe (Rc) et ladite distance de contrôle de pénétration (Rp) est compris entre 0,03 mm et 0,3 mm.

**13.** Instrument de coupe (10, 82, 84, 86) selon l'une quelconque des revendications 5 à 12, dans lequel l'extrémité libre (90) dudit fût (12) comporte des arêtes frontales (92, 92') en saillie, dans lesquelles chaque arête frontale (92, 92') s'étend sensiblement au moins jusqu'au plan longitudinal médian (P) qui lui est perpendiculaire, et dans lesquelles au moins l'une (92') desdites arêtes frontales (92, 92') s'étend au-delà dudit plan longitudinal médian (P) qui lui est perpendiculaire.

**14.** Instrument de coupe (10, 82, 84, 86) selon la revendication 13, dans lequel chacune de ces arêtes frontales (92, 92') se trouve dans le prolongement longitudinal d'une paroi (162) d'une goujure (16) sur laquelle s'appuie une arête radiale de coupe (20).

**15.** Instrument de coupe (10, 82, 84, 86) selon la revendication 13 ou 14, dans lequel ledit fût comporte exactement deux goujures et deux parties actives, et dans lequel lesdites arêtes frontales (92, 92') sont au nombre de deux et sont sensiblement parallèles.

**16.** Instrument de coupe (10, 82, 84, 86) selon l'une quelconque des revendications 13 à 15, dans lequel une seule (92') desdites arêtes frontales (92, 92') s'étend au-delà dudit plan longitudinal médian (P).

**17.** Instrument de coupe (110) selon l'une quelconque des revendications 1 à 4, dans lequel ledit fût (112) est un fût cylindrique ou conique ou de forme arrondie, annulaire, et ayant un rayon intérieur (Ri) qui est confondu avec ladite distance de coupe (Rc).

18. Instrument de coupe (110) selon la revendication 17, dans lequel ladite distance de contrôle de pénétration (Rp) est constante, de sorte que ladite face de contrôle (140) présente, dans un plan transversal audit axe longitudinal (114), un profil en arc de cercle.

19. Instrument de coupe (110) selon la revendication 17 ou 18, dans lequel ladite longueur angulaire de détalonnage ($\delta$d) est comprise entre 10 degrés et 90 degrés.

20. Instrument de coupe (110) selon l'une quelconque des revendications 17 à 19, dans lequel l'écart ($\Delta$d), en valeur absolue, entre ladite distance de coupe (Rc) et ladite distance terminale de détalonnage (Rd) est compris entre 2% et 15% d'un rayon extérieur qui est défini comme étant la somme du rayon intérieur (Ri) et de l'épaisseur (Ep) du fût annulaire (112).

21. Instrument de coupe (110) selon l'une quelconque des revendications 17 à 20, dans lequel la longueur angulaire de contrôle de pénétration ($\delta$p) est comprise entre 60 degrés et 140 degrés.

22. Instrument de coupe (110) selon l'une quelconque des revendications 17 à 21, dans lequel l'écart ($\Delta$p), en valeur absolue, entre ladite distance de coupe (Rc) et ladite distance de contrôle de pénétration (Rp) est compris entre 0,03 mm et 0,3 mm.

23. Procédé d'usinage d'une griffe de sertissage dans le domaine de la bijouterie, **caractérisé en ce qu'**il met en oeuvre un instrument de coupe (110) selon l'une quelconque des revendications 17 à 22.

**Claims**

1. Cutting tool (10, 82, 84, 86, 110) of a rotating type, in particular a milling cutter or borer, said cutting tool (10, 82, 84, 86, 110) being provided with a body (12, 112) having a longitudinal axis (14, 114) and at least one flute (16, 116) alternating with at least one active part (18, 118), each flute (16, 116) and each active part (18, 118) being machined in the body (12, 112),
wherein
each active part (18, 118) has a peripheral surface comprising in succession:

- a radial cutting edge (20, 120),
- a substantially planar face constituting a clearance face (30, 130), to favour the elimination of chips,
- a transition face (50, 150) making an angle with the said clearance face (30, 130), and
- a control face (40, 140) to control the depth of penetration of the cutting, said control face opening into a flute (16, 116),
and wherein
- said radial cutting edge (20, 120) defines a cutting envelope (22, 122) and is situated at a cutting distance (Rc) from said longitudinal axis (14, 114),
- said clearance face (30, 130) is defined by an angular clearance length ($\delta$d) and is situated at a distance from said longitudinal axis (14, 114) that varies between the cutting distance (Rc) and a final clearance distance (Rd),
- said transition face (50, 150) is situated at a transition distance (Rt) from the longitudinal axis (14),
- said control face (40, 140) is defined by an angular penetration control length ($\delta$p) and is situated at a penetration control distance (Rp) from said longitudinal axis (14, 114),
- the absolute difference ($\Delta$p) between the cutting distance (Rc) and the penetration control distance (Rp) is larger than zero and smaller than the absolute difference ($\Delta$t) between the cutting distance (Rc) and said transition distance (Rt), satisfying the relation:

$$0 < \Delta p < \Delta t, \text{ with } \Delta p = |Rc - Rp| \text{ and } \Delta t = |Rc - Rt|,$$

and
- the absolute difference ($\Delta$p) between said cutting distance (Rc) and said penetration control distance (Rp) is smaller than the absolute difference (Δd) between said cutting distance (Rc) and said final clearance distance (Rd), satisfying the relation:

$$0 < \Delta p < \Delta d, \text{ with } \Delta p = |Rc - Rp| \text{ and } \Delta d = |Rc - Rd|.$$

2. Cutting tool (10, 82, 84, 86, 110) according to claim 1, wherein said radial cutting edge (20, 120) is defined by an angle of attack (β) that is substantially zero.

3. Cutting tool (10, 82, 84, 86, 110) according to claim 1, wherein said radial cutting edge (20, 120) is defined by an angle of attack (β) that is negative.

4. Cutting tool (10, 82, 84, 86, 110) according to claim 1, wherein said radial cutting edge (20, 120) is defined by an angle of attack (β) that is positive.

5. Cutting tool (10, 82, 84, 86) according to any one of claims 1 to 4, wherein said body (12) is a cylindrical or conical or rounded-shaped body, with a radius (Rf) that coincides with the cutting distance (Rc).

6. Cutting tool (10, 82, 84, 86) according to claim 5, wherein said penetration control distance (Rp) is constant, so that said control face (40) in a plane transverse to said longitudinal axis (14) has a circular-arc profile.

7. Cutting tool (10, 82, 84, 86) according to claim 5, wherein said penetration control distance (Rp) is linear, so that said control face (40) in a plane transverse to said longitudinal axis (14) has a rectilinear profile.

8. Cutting tool (10, 82, 84, 86) according to any one of claims 5 to 7, wherein said angular clearance length (δd) is comprised between 5° and 160°.

9. Cutting tool (10, 82, 84, 86) according to any one of claims 5 to 8, wherein said absolute difference (Δd) between said cutting distance (Rc) and said final clearance distance (Rd) is comprised between 0.03 mm and 0.3 mm.

10. Cutting tool (10, 82, 84, 86) according to any one of claims 5 to 9, comprising at least two flutes (16) and at least two active parts (18), and wherein said angular penetration control length (δp) is comprised between 0° and 100°.

11. Cutting tool (10, 82, 84, 86) according to any one of claims 5 to 9, comprising a single flute (16) and a single active part (18), and wherein said angular penetration control length (δp) is comprised between 0° and 300°.

12. Cutting tool (10, 82, 84, 86) according to any one of claims 5 to 11, wherein the absolute difference (Δp) between said cutting distance (Rc) and said penetration control distance (Rp) is comprised between 0.03 mm and 0.3 mm.

13. Cutting tool (10, 82, 84, 86) according to any one of claims 5 to 12, wherein the free end (90) of said body (12) comprises protruding front edges (92, 92'), wherein each front edge (92, 92') extends substantially at least up to the longitudinal median plane (P) that is perpendicular to it, and wherein at least one (92') of said front edges (92, 92') extends beyond said longitudinal median plane (P) that is perpendicular to it.

14. Cutting tool (10, 82, 84, 86) according to claim 13, wherein each of these front edges (92, 92') is situated in the longitudinal extension of a wall (162) of a flute (16) on which a radial cutting edge (20) is resting.

15. Cutting tool (10, 82, 84, 86) according to claim 13 or 14, wherein said body comprises exactly two flutes and two active parts, and wherein said front edges (92, 92') are numbering two and are substantially parallel.

16. Cutting tool (10, 82, 84, 86) according to any one of claims 13 to 15, wherein just one (92') of said front edges (92, 92') extends beyond said longitudinal median plane (P).

17. Cutting tool (110) according to any one of claims 1 to 4, wherein said body (112) is an annular body with a cylindrical or conical or rounded shape, and having an inner radius (Ri) that coincides with said cutting distance (Rc).

18. Cutting tool (110) according to claim 17, wherein said penetration control distance (Rp) is constant, so that said control face (140) in a plane transverse to said longitudinal axis (114) has a circular-arc profile.

**19.** Cutting tool (110) according to claim 17 or 18, wherein said angular clearance length (δd) is comprised between 10° and 90°.

**20.** Cutting tool (110) according to any one of claims 17 to 19, wherein the absolute difference (Δd) between said cutting distance (Rc) and said final clearance distance (Rd) is comprised between 2 % and 15 % of an outer radius that is defined as the sum of the inner radius (Ri) and the thickness (Ep) of the annular body (112).

**21.** Cutting tool (110) according to any one of claims 17 to 20, wherein the angular penetration control length (δp) is comprised between 60° and 140°.

**22.** Cutting tool (110) according to any one of claims 17 to 21, wherein the absolute difference (Δp) between said cutting distance (Rc) and said penetration control distance (Rp) is comprised between 0.03 mm and 0.3 mm.

**23.** Method of machining a setting claw in the field of jewellery, **characterised in that** it applies a cutting tool (110) according to any one of claims 17 to 22.

**Patentansprüche**

**1.** Schneidwerkzeug (10, 82, 84, 86, 110) vom rotierenden Typ, insbesondere vom Typ eines Fräsers oder einer Reibahle, wobei das Schneidwerkzeug (10, 82, 84, 86, 110) mit einem Schaft (12, 112) mit einer Längsachse (14, 114) ausgestattet ist, der mindestens eine Spannut (16, 116) aufweist, die sich mit mindestens einem aktiven Teil (18, 118) abwechselt, wobei jede Spannut (16, 116) und jeder aktive Teil (18, 118) in den Schaft (12, 112) eingearbeitet ist,
wobei
jeder aktive Teil (18, 118) eine Umfangsfläche aufweist, welche nacheinander aufweist:

    - eine radiale Schneidkante (20, 120),
    - eine im Wesentlichen ebene Fläche, welche eine Hinterschneidungsfläche (30, 130) darstellt, um die Abführung der Späne zu fördern,
    - eine Übergangsfläche (50, 150), die einen Winkel mit der Hinterschneidungsfläche (30, 130) bildet, und
    - eine Steuerfläche (40, 140), um die Eindringtiefe des Schnitts zu steuern, wobei die Steuerfläche in eine Spannut (16, 116) einmündet,
    und wobei
    - die radiale Schneidkante (20, 120) eine Schneidhülle (22, 122) definiert und sich in einem Schneidabstand (Rc) von der Längsachse (14, 114) befindet,
    - die Hinterschneidungsfläche (30, 130) durch eine Hinterschneidungs-Winkellänge (δd) definiert ist und sich in einem Abstand von der Längsachse (14, 114) befindet, welcher zwischen dem Schneidabstand (Rc) und einem Hinterschneidungs-Endabstand (Rd) variiert,
    - die Übergangsfläche (50, 150) sich in einem Übergangsabstand (Rt) von der Längsachse (14) befindet,
    - die Steuerfläche (40, 140) durch eine Eindringsteuerungs-Winkellänge (δp) definiert ist und sich in einem Eindringsteuerungsabstand (Rp) von der Längsachse (14, 114) befindet,
    - der absolute Betrag (Δp) der Differenz zwischen dem Schneidabstand (Rc) und dem Eindringsteuerungsabstand (Rp) größer als null und kleiner als der absolute Betrag (Δt) der Differenz zwischen dem Schneidabstand (Rc) und dem Übergangsabstand (Rt) ist, so dass die Beziehung erfüllt ist:

$$0 < \Delta p < \Delta t, \text{ mit } \Delta p = \left| Rc - Rp \right| \text{ und } \Delta t = \left| Rc - Rt \right|,$$

und
    - der absolute Betrag (Δp) der Differenz zwischen dem Schneidabstand (Rc) und dem Eindringsteuerungsabstand (Rp) kleiner als der absolute Betrag (Δd) der Differenz zwischen dem Schneidabstand (Rc) und dem Hinterschneidungs-Endabstand (Rd) ist, so dass die Beziehung erfüllt ist:

$$0 < \Delta p < \Delta d, \text{ mit } \Delta p = \left| Rc - Rp \right| \text{ und } \Delta d = \left| Rc - Rd \right|.$$

**2.** Schneidwerkzeug (10, 82, 84, 86, 110) nach Anspruch 1, wobei die radiale Schneidkante (20, 120) durch einen Angriffswinkel ($\beta$) definiert ist, welcher im Wesentlichen gleich null ist.

**3.** Schneidwerkzeug (10, 82, 84, 86, 110) nach Anspruch 1, wobei die radiale Schneidkante (20, 120) durch einen Angriffswinkel ($\beta$) definiert ist, welcher negativ ist.

**4.** Schneidwerkzeug (10, 82, 84, 86, 110) nach Anspruch 1, wobei die radiale Schneidkante (20, 120) durch einen Angriffswinkel ($\beta$) definiert ist, welcher positiv ist.

**5.** Schneidwerkzeug (10, 82, 84, 86) nach einem der Ansprüche 1 bis 4, wobei der Schaft (12) ein zylindrischer oder konischer oder eine gerundete Form aufweisender Schaft ist und einen Radius (Rf) aufweist, welcher mit dem Schneidabstand (Rc) zusammenfällt.

**6.** Schneidwerkzeug (10, 82, 84, 86) nach Anspruch 5, wobei der Eindringsteuerungsabstand (Rp) konstant ist, so dass die Steuerfläche (40) in einer quer zu der Längsachse (14) verlaufenden Ebene ein kreisbogenförmiges Profil aufweist.

**7.** Schneidwerkzeug (10, 82, 84, 86) nach Anspruch 5, wobei der Eindringsteuerungsabstand (Rp) linear ist, so dass die Steuerfläche (40) in einer quer zu der Längsachse (14) verlaufenden Ebene ein geradliniges Profil aufweist.

**8.** Schneidwerkzeug (10, 82, 84, 86) nach einem der Ansprüche 5 bis 7, wobei die Hinterschneidungs-Winkellänge ($\delta$d) zwischen 5 Grad und 160 Grad liegt.

**9.** Schneidwerkzeug (10, 82, 84, 86) nach einem der Ansprüche 5 bis 8, wobei der absolute Betrag ($\Delta$d) der Differenz zwischen dem Schneidabstand (Rc) und dem Hinterschneidungs-Endabstand (Rd) zwischen 0,03 mm und 0,3 mm liegt.

**10.** Schneidwerkzeug (10, 82, 84, 86) nach einem der Ansprüche 5 bis 9, welches mindestens zwei Spannuten (16) und mindestens zwei aktive Teile (18) aufweist, und wobei die Eindringsteuerungs-Winkellänge ($\delta$p) zwischen 0 Grad und 100 Grad liegt.

**11.** Schneidwerkzeug (10, 82, 84, 86) nach einem der Ansprüche 5 bis 9, welches eine einzige Spannut (16) und einen einzigen aktiven Teil (18) aufweist, und wobei die Eindringsteuerungs-Winkellänge ($\delta$p) zwischen 0 Grad und 300 Grad liegt.

**12.** Schneidwerkzeug (10, 82, 84, 86) nach einem der Ansprüche 5 bis 11, wobei der absolute Betrag ($\Delta$p) der Differenz zwischen dem Schneidabstand (Rc) und dem Eindringsteuerungsabstand (Rp) zwischen 0,03 mm und 0,3 mm liegt.

**13.** Schneidwerkzeug (10, 82, 84, 86) nach einem der Ansprüche 5 bis 12, wobei das freie Ende (90) des Schaftes (12) vorstehende Vorderkanten (92, 92') aufweist, wobei jede Vorderkante (92, 92') sich im Wesentlichen mindestens bis zu der Mittellängsebene (P) erstreckt, welche zu ihr senkrecht ist, und wobei mindestens eine (92') dieser Vorderkanten (92, 92') sich über die Mittellängsebene (P), welche zu ihr senkrecht ist, hinaus erstreckt.

**14.** Schneidwerkzeug (10, 82, 84, 86) nach Anspruch 13, wobei jede dieser Vorderkanten (92, 92') sich in der longitudinalen Verlängerung einer Wand (162) einer Spannut (16) befindet, auf welche sich eine radiale Schneidkante (20) stützt.

**15.** Schneidwerkzeug (10, 82, 84, 86) nach Anspruch 13 oder 14, wobei der Schaft genau zwei Spannuten und zwei aktive Teile aufweist, und wobei die Anzahl der Vorderkanten (92, 92') zwei beträgt und diese Vorderkanten im Wesentlichen parallel sind.

**16.** Schneidwerkzeug (10, 82, 84, 86) nach einem der Ansprüche 13 bis 15, wobei nur eine (92') der Vorderkanten (92, 92') sich über die Mittellängsebene (P) hinaus erstreckt.

17. Schneidwerkzeug (110) nach einem der Ansprüche 1 bis 4, wobei der Schaft (112) ein ringförmiger zylindrischer oder konischer oder eine gerundete Form aufweisender Schaft ist und einen Innenradius (Ri) aufweist, welcher mit dem Schneidabstand (Rc) zusammenfällt.

18. Schneidwerkzeug (110) nach Anspruch 17, wobei der Eindringsteuerungsabstand (Rp) konstant ist, so dass die Steuerfläche (140) in einer quer zu der Längsachse (114) verlaufenden Ebene ein kreisbogenförmiges Profil aufweist.

19. Schneidwerkzeug (110) nach Anspruch 17 oder 18, wobei die Hinterschneidungs-Winkellänge ($\delta$d) zwischen 10 Grad und 90 Grad liegt.

20. Schneidwerkzeug (110) nach einem der Ansprüche 17 bis 19, wobei der absolute Betrag ($\Delta$d) der Differenz zwischen dem Schneidabstand (Rc) und dem Hinterschneidungs-Endabstand (Rd) zwischen 2 % und 15 % eines Außenradius liegt, welcher als die Summe des Innenradius (Ri) und der Dicke (Ep) des ringförmigen Schaftes (112) definiert ist.

21. Schneidwerkzeug (110) nach einem der Ansprüche 17 bis 20, wobei die Eindringsteuerungs-Winkellänge ($\delta$p) zwischen 60 Grad und 140 Grad liegt.

22. Schneidwerkzeug (110) nach einem der Ansprüche 17 bis 21, wobei der absolute Betrag ($\Delta$p) der Differenz zwischen dem Schneidabstand (Rc) und dem Eindringsteuerungsabstand (Rp) zwischen 0,03 mm und 0,3 mm liegt.

23. Verfahren zur spanenden Bearbeitung einer Crimpkralle im Bereich der Bijouterie, **dadurch gekennzeichnet, dass** dabei ein Schneidwerkzeug (110) nach einem der Ansprüche 17 bis 22 zur Anwendung kommt.

Fig.1

Fig.10

**Fig.2**

Fig.3

16

11

10

A

16

Fig.4

16

11

10

A

16

Fig.5

β

16
164  162

10

22

A

162  164
16

20

Fig.6

16
164  162

20

10

22

A

11

162  164
16

β

Fig.7

Fig.8

Fig.9

Fig.11

Fig.12

Fig.13

Fig.14

# Fig.15

Fig.16

Fig.17

Fig.18

Fig.19

Fig.20

Fig.21

Fig.22

Fig.23

**EP 2 207 639 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4560309 A